# EUROPEAN PATENT APPLICATION

(11) **EP 1 092 834 A1**
(43) Date of publication of application: **18.04.2001**
(21) Application number: 00308794.7
(22) Date of filing: 05.10.2000
(51) Int. Cl.: E21B 34/02, F16K 1/54

(54) **Landfill gas control valve**

(30) Priority: 15.10.1999 GB 9924524
(71) Applicant: Bawden, Nigel Anthony, Maidstone, Kent ME17 3RD (GB)
(72) Inventor: Bawden, Nigel Anthony, Maidstone, Kent ME17 3RD (GB)
(74) Representative: Johnstone, Douglas Ian

(57) **Abstract**

The valve includes a valve body (46) with an inlet opening (49) and an outlet opening (29) between which an insert (50) defines a cylindrical control region (51) in which a frust-conical control member (80) is axially displaceable by means of a screw-threaded rod (94) which engages a complementarily screw-threaded bore (120) in an adjuster plate (114). Upon full closure of the valve, an O-ring (93) on the control member (80) seals against an annular sealing surface (56) at a downstream end of the insert (50). A gap (48) between the control member (80) and the insert inner surfce (53) tapers towards the outlet opening (29). When the valve is fully open (84) the control member (80) is situated wholly downstream of the control region (51). Equally spaced graduations (95) on the actuating rod (94) sequentially register with a distal end (78) of a sleeve (76) connected to the adjuster plate (114) to indicate the extend to which the valve is open. The valve has a linear flow against displacement characteristic.

## Description

The present invention relates of a landfill gas control valve for controlling the flow of gas produced by a landfill site.

Where refuse has been used for landfill purposes the refuse produces a mixture of gases including methane, carbon dioxide and other trace gases for a significant period of time after the landfill operation has been completed. Typically, after completion of the landfill operation, the landfill is capped with an impervious material which prevents rain leaching noxious substances downwards out of the landfill and also seals the landfill to prevent migration of gas to the atmosphere, The installation of the capping layer can produce a "pressure cooker" effect within the landfill with a gradual build-up of combustible gases. Where the site is located within pervious or fractured soils, gases may migrate laterally from the site into neighbouring land and property.

Due to the increasing costs associated with the generation of electrical power there is an increasing trend to utilise landfill gas for power generation purposes (a one million cubic metre landfill site can generate up to half a megawatt of electricity).

Typically, to extract gas from a landfill site it is necessary to provide a borehole from ground level to the base of the site. A perforated or slotted borehole liner is normally inserted into the borehole. An extraction unit is utilised to provide suction to enable landfill gas from the borehole to be drawn through a regulating wellhead which is fitted to the borehole liner.

For generation purposes it is desirable to maximise the amount of methane being extract from the landfill site and to this end precise control of extracted gases is of paramount importance.

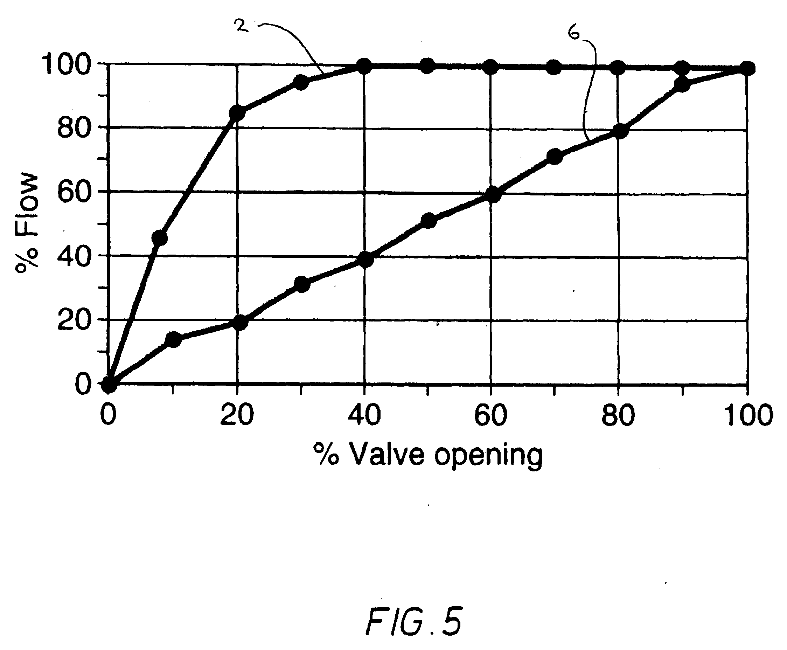

Such gas control has hitherto typically been provided by a butterfly, ball or gate valve located adjacent to the wellhead. Such valves however do not provide adequate control of flow of gas through the valve. Figure 5 is graph of percentage flow through the valve against percentage valve opening. Line 2 on the graph shows a typical characteristic curve for a conventional butterfly valve. Flow through the valve rises steeply to substantially full flow as the first 40% of valve opening is performed. As a consequence of this, precise flow control is not easy.

It is an object of the invention to provide an improved landfill gas control valve which provides greater gas flow control. Thus according to the invention there is provided a landfill gas control valve comprising a valve body having inlet and outlet openings interconnected by a passage having a control region, a tapered flow control member adjustably positionable within the control region, adjustment means for displacing the flow control member along a central longitudinal axis of the valve relative to the control region and sealing means for preventing gas flow through the valve when the flow control member is positioned at least partially within the control region.

A wellhead provided with such a valve can be designed to provide near-linear control over the flow of gas through the wellhead.

Preferably the flow control member is frusto-conical but other tapered forms such as a frustum of a pyramid could also be utilised. Such a control member has been found to provide particularly accurate and near-linear flow control over the full range of movement of the control member.

External faces of the control member are preferably inclined at between 3 degrees and 13 degrees to a central longitudinal axis of the control member along which it is displaceable. More preferably this angle lies in the range 5 degrees to 10 degrees.

The sealing means is preferably operatively associated with the control member and more preferably mounted on an integral part thereof. The sealing means is preferably resilient and is urged sealingly against a sealing surface substantially at the same time as the control member becomes substantially fully accommodated within the control region. Preferably the sealing surface comprises an annular surface disposed substantially perpendicular to the valve's central longitudinal axis. With such an arrangement, full sealing of the valve will occur even if anything prevents the tapered control member from moving fully into the control region.

The adjusting means preferably comprises a screw-threaded adjusting means in order that small movements of the control member can be effected. More preferably the adjusting means comprises an externally screw-threaded member coaxially connected to the control member and a complementary internally screw-threaded passage fixed relative to the valve body.

The valve preferably includes indicating means which serves to indicate the extent to which the valve is open. The indicating means conveniently comprises an indicator member which is fixed relative to and moves together with the control member. As a consequence of the linear response of the valve, the indicator member can conveniently be marked with equally spaced graduations.

The adjusting means conveniently includes a manual adjusting member. Preferably the adjusting member is operatively connected to the other parts of the adjusting means so as to be rotatable about the central longitudinal axis of the valve.

When the adjusting means comprises a screw-threaded member, the manual adjusting member may conveniently be integrally formed therewith and the indication member may be positioned between the screw-threaded member and the manual adjusting member and more preferably is integrally formed with both of these members.

The control region may conveniently be formed by an inwardly necked substantially parallel sided portion of the passage through the valve. A smaller diameter end face of the control member preferably has a diameter of between 75% and 85% of the internal diameter of an adjacent part of the control region when the control member is substantially completely accommodated therein.

Other features and advantages of the valve will become apparent from the following description of preferred embodiments of the invention which are described with reference to the accompanying drawings in which:
Figure 1 is a perspective view of a valve according to the invention connected to a landfill gas wellhead;
Figure 2 is perspective view of an alternative method of connecting a valve according to the invention to a landfill gas wellhead;
Figure 3 is a part cut away perspective view of a landfill gas control valve constructed according to the invention;
Figure 4 is a cross-section on the line 44 of the valve shown in Figure 3;
Figure 5 is a graph showing how flow through the valve varies as a function of valve opening for a conventional butterfly valve and a valve according to the invention; and
Figure 6 is a view similar to Figure 4 of an alternative embodiment of the invention.

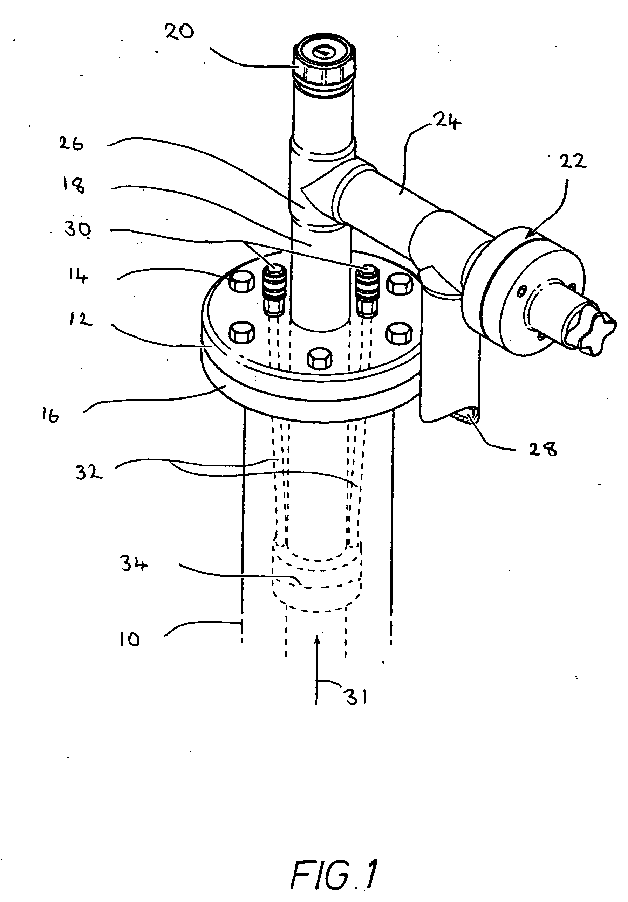

Figure 1 shows the top end of a borehole liner 10, the lower end of which extends to the bottom of a landfill site. A valve mounting plate 12 is connected by bolts 14 to a cap plate 16 secured to the top of the borehole liner 10. A liner access tube 18 projects upwardly from the valve mounting plate 12 and is closed at its upper end by a removable inspection cap 20 in which a thermometer for measuring the temperature of gas passing upwards through the liner 10 may be mounted.

A valve 22 according to the invention is connected via a valve inlet pipe 24 to a T-piece 26 inserted into the liner access tube 18. The valve 22 has an outlet pipe 28.

The valve mounting plate 12 has two monitoring ports 30 each of which is connected to a downwardly extending tube 32 leading down to and providing fluid communication with upper and lower sides respectively of an aperture plate 34 (shown schematically in dashed lines in Figure 1). Flow of gas from the borehole liner is constrained to pass through an aperture in the plate 34 which creates a pressure differential thereacross. The magnitude of this pressure differential, which is sensed via the monitoring ports 30, indicates the rate of gas flow 31 through the valve 22.

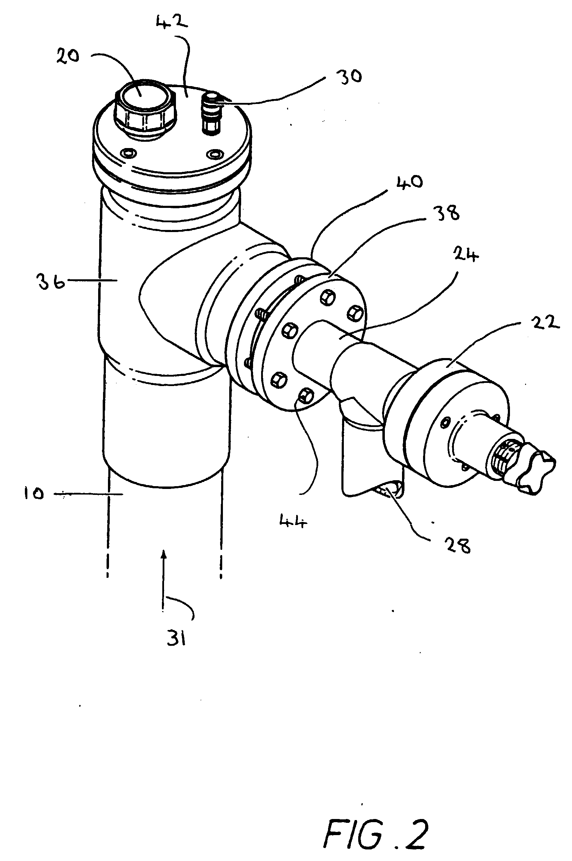

Figure 2 shows an alternative arrangement for connecting the valve 22 to a borehole liner 10. A T-piece 36 is connected to the upper end of the borehole liner, one branch of which is closed by a cover plate 42 having an inspection cap 20 and at least one monitoring port 30, and another branch of which is provided with a borehole liner flange 40 which is connected by bolts 44 to a valve connection flange 38 which projects outwardly from a distal end of the valve inlet pipe 24.

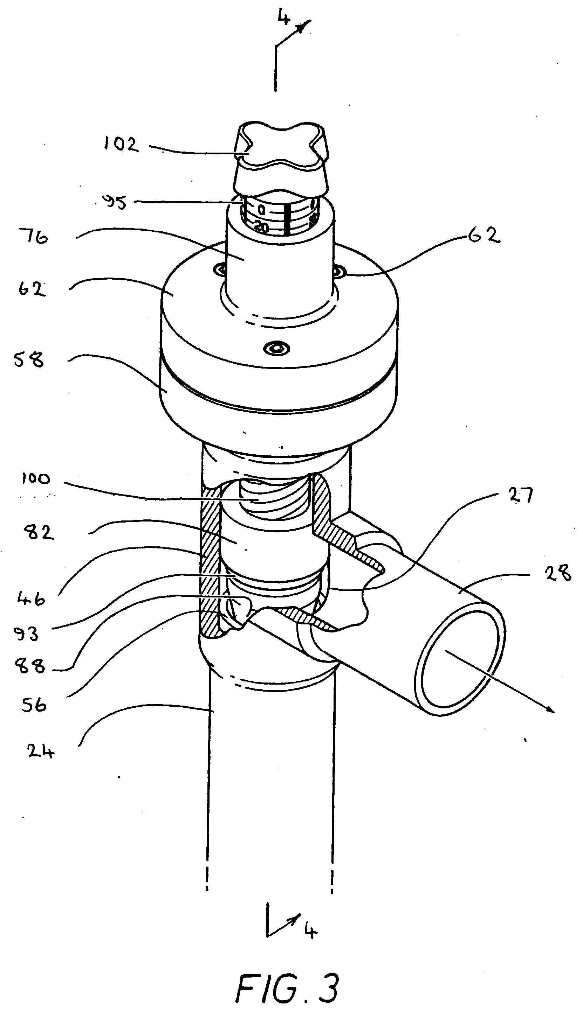

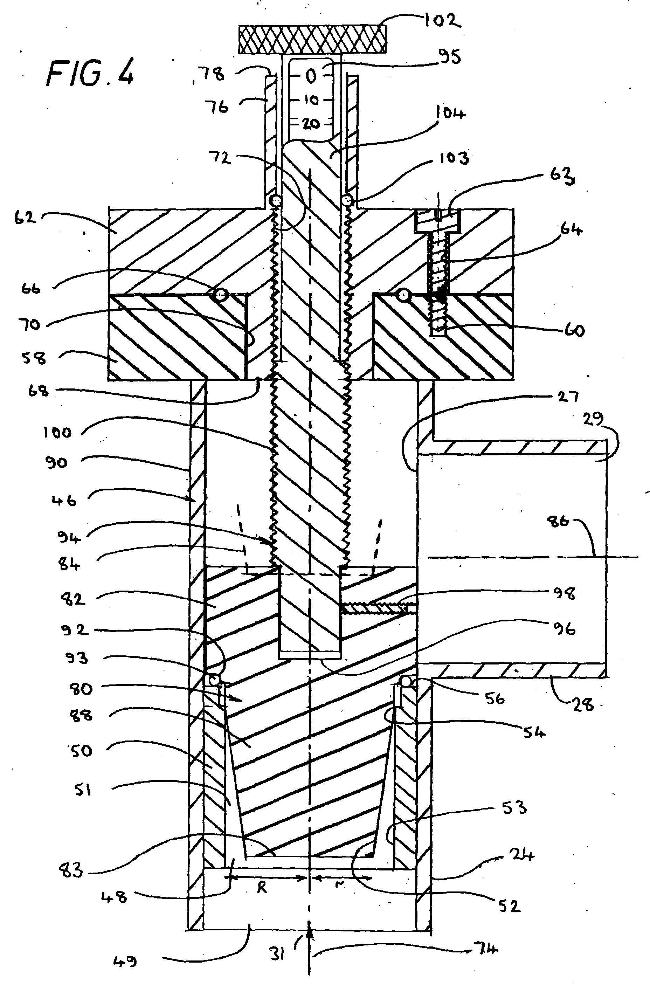

The valve 22 will now be described in detail with particular reference to Figures 3 and 4.

The valve includes a valve body 46 defining an inlet pipe 24 defining an inlet opening 49 and an outlet pipe 28 defining an outlet opening 29 disposed perpendicular thereto. A control region 51 is defined in an insert 50 with parallel inner surfaces 53 situated in the inlet pipe 24 by glueing. The insert 50 is positioned upstream of an entrance 27 to the outlet pipe 28. The end of the insert 50 adjacent the entrance 27 is constituted by an annular sealing surface 56 which is located closely adjacent to and circumscribes an open end 54 of the insert 50.

Situated on the opposite side of the outlet pipe entrance 27 to the insert 50, is a flange 58 with internally screw-threaded circumferentially spaced apertures 60. An annular valve adjuster plate 62 is screwed to the flange 58 by machine screws 63 which are situated in through bores 64 in the valve adjuster plate 62. A nitrile O-ring 66 is sealingly clamped between complementary confronting annular grooves formed in the flange 58 and the valve adjuster plate 62. A boss 68 extends from an inwardly facing surface of the valve adjuster plate 62 and is located in a central hole 70 in the flange 58. Extending right through the valve adjuster plate 62 and the boss 68 is a centrally positioned internally screw-threaded bore 72 which is aligned with the central longitudinal axis 74 of the valve. Extending outwardly from the valve adjuster plate 62 is a sleeve 76, a distal end 78 of which defines a datum line.

A flow control member 80, coaxially arranged in the valve body 46 is displaceable along the central axis 74 from the position shown in Figure 4, in which the valve is fully closed, to a second open position in which a distal end face 83 of the control member 80 is situated in the position 84 shown in dashed lines in Figure 4. In the open position, the control member still slightly overlaps a centre line 86 of the outlet pipe 28.

The control member 80 includes a frusto-conical lower portion 88, the external faces or sides 52 of which are disposed at approximately 7 degrees to the valve's central axis 74. A guide cylinder 82 is integrally formed with the frusto-conical portion 88 and is a snug sliding fit inside a central cylindrical portion 90 of the valve body 46. The radius r of the smaller end of the control member 80 is between 75% and 85% of the internal radius R of the control region 51 inside the insert 50 and preferably around 82% thereof leaving a gap 48 between the control member 80 and the insert 50 at the control members distal end face 82 when the valve is closed. This gap may however be a parallel rather than a tapering gap as shown in Figure 4.

A ring seat 92 is formed in the control member 80 between the guide cylinder 82 and the frusto-conical portion 80 and supports a nitrile O-ring 93 which is compressed against the sealing surface 56 of the insert 50 as the frusto-conical portion 88 of the control member 80 becomes fully accommodated within the control region 51.

In order to move the control member 80 between the open and closed positions described above, an actuating rod 94 secured in a blind bore 96 in the guide cylinder 82 by means of a plurality of grub screws 98 (only one shown) has an external screw-thread 100 which engages the complementary threaded internal bore 72 in the valve adjuster plate 62 and the boss 68.

The actuating rod 94 is turned by means of a handle 102 connected thereto. A non-threaded part 104 of the actuating rod 94 extends between the screw thread 100 and the handle 102 and sealingly engages an O-ring 103 situated at the base of the sleeve 76. Connected to the outside of the non-threaded part 104 of the actuating rod 94 is a graduated scale 95 bearing numbers indicating the percentage extent to which the valve is open.

Rotation of the handle 102 will accordingly rotate the threaded part of the actuating rod 94 relative to the valve adjuster plate 62 and cause movement of the frustoconical portion 88 of the control member 80 into or out of the control region 51. In this manner, the flow of gas 31 through the valve can be accurately controlled. Due to the substantially linear relationship between the extent of valve opening and the flow of gas through the valve (as shown by line 6 in Figure 5) if the control member is moved a distance of say 10% of the full distance for effecting complete opening of the valve, roughly 10% of the maximum gas throughflow will be permitted etc. Furthermore, the sealing action of the O-ring seal means that effective closure of the valve can be achieved eliminating any leakage therethrough.

The valve is particularly suitable for controlling gas supplied at a pressure of around 100 millibars.

The valve parts are preferably manufactured from polyethylene, except for the actuating rod 94 which is preferably made of nylon and the sealing rings which are made of nitrile. The insert may be integrally formed with the valve body.

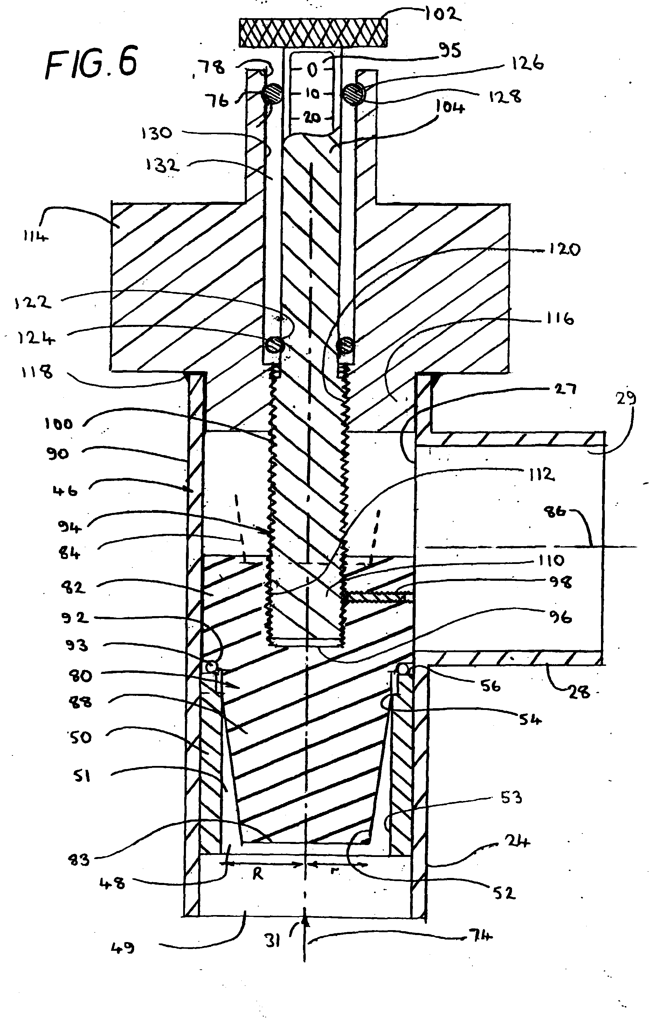

An alternative embodiment of the invention is shown in Figure 6 in which parts which correspond to the first embodiment shown in Figure 4 are designated with the same reference numerals and are not described further below. The major differences from the first embodiment are described below.

The actuating rod 94 has a threaded distal end 110 which engages a complementary threaded blind bore 112 in the flow control member 80, where it is retained by a grub screw 98.

The upper end of the valve body 46, as viewed in Figure 6, is surmounted by a one-piece adjuster plate 114 having an annular boss 116 which fits snugly inside the valve body 46 and is retained in place by a weld 118. An internally threaded central bore 120 in the boss 116 is engaged by the external screw thread 100 on the actuating rod 94. A nitrile O-ring 124 is fitted round an outwardly facing O-ring groove 122 situated at the base of the non-threaded part 104 of the actuating rod 94 close to where the non-threaded part joins the threaded part. This O-ring 124 moves up and down with the actuating rod 94 sliding over an interior surface 130 of the adjuster plate 114 and prevents seepage of gas out of the valve through the adjuster plate 114. A second nitrile O-ring 126 is seated in an inwardly facing second O-ring groove 128 close to the distal end 78 of the sleeve 76. This second O-ring prevents ingress of contaminants into a gap 132 between the adjuster plate and the actuating rod 94 and also acts as a back-up seal to prevent leakage of gas from the valve in the event of the O-ring 124 becoming damaged.

The operation of the valve shown in Figure 6 will be substantially the same as that described above with reference to Figure 4.

Any suitable resilient material other than nitrile may be used for the O-rings.

## Claims

1. A landfill gas control valve comprising a valve body (46) having inlet and outlet openings (49, 29) interconnected by a passage having a control region (51), a tapered flow control member (80) adjustably positionable within the control region (51), adjustment means (62, 94, 102) for displacing the flow control member (80) along a central longitudinal axis (74) of the valve relative to the control region (51) and sealing means (56, 93) for preventing gas flow through the valve when the flow control member (80) is positioned at least partially within the control region (51).

2. A valve according to claim 1 wherein the flow control member (80) comprises a frustum.

3. A valve according to claim 2 wherein the flow control member (80) is frusto-conical.

4. A valve according to any preceding claim wherein external faces (52) of the control member (80) are inclined at between 3° and 13° to a central longitudinal axis (74) of the control member (80).

5. A valve according to claim 4 wherein the external faces (52) of the control member (80) are inclined at between 5° and 10° to the central longitudinal axis (74) of the control member (80).

6. A valve according to any preceding claim wherein the control region (51) is formed by a necked portion (50) of the passage through the valve.

7. A valve according to claim 6 wherein the necked portion has substantially parallel inner surfaces (53).

8. A valve according to any preceding claim wherein the flow control member (80) has a transverse external dimension (2r) of between 75% and 85% of an internal transverse dimension (2R) of a part of the control region (51) adjacent thereto when the flow control member (80) is substantially wholly within the control region (51).

9. A valve according to any preceding claim wherein the sealing means (56, 93) includes a resilient sealing member (93) mounted on the flow control member (80).

10. A valve according to any preceding claim wherein the sealing means (56, 93) is arranged to prevent gas flow through the valve when the flow control member (80) is substantially fully accommodated within the control region (51).

11. A valve according to any preceding claim wherein the sealing means (56, 93) includes an annular surface (56) of the valve body (46) disposed substantially perpendicularly to a central longitudinal axis (74) of the valve.

12. A valve according to any preceding claim wherein a gap (48) between the flow control member (80) and a confronting inner surface (53) of the control region (51) tapers inwardly in a flow direction towards the outlet opening (29).

13. A valve according to any preceding claim wherein, in an open position of the valve, the flow control member (80) is positioned completely outside and downstream of the control region (51).

14. A valve according to any preceding claim wherein the flow control member (80) is connected to and displaceable with a movement guiding cylinder (82) which is a sliding fit inside a central portion of the valve body (46).

15. A valve according to any preceding claim including indicating means (95) which moves together with the flow control member (80) to indicate the extent to which the valve is open.

16. A valve according to any preceding claim configured to provide a substantially linear relationship between axial displacement of the flow control member (80) and volumetric flow through the valve.
